# EUROPÄISCHE PATENTSCHRIFT

(11) **EP 1 536 171 B1**
(45) Veröffentlichungstag und Bekanntmachung des Hinweises auf die Patenterteilung: **06.05.2009**
(21) Anmeldenummer: 03024937.9
(22) Anmeldetag: 29.10.2003
(51) Int. Cl.: F16L 9/12, B32B 1/08, B32B 27/30

(54) **Mehrschichtige Kunststoffleitung mit PVC-Schicht**
Multilayer pastic pipe with PVC layer
Tuyau multicouche en matière plastique avec couche en polymère de chlorure de vinyle

(43) Veröffentlichungstag der Anmeldung: 01.06.2005
(73) Patentinhaber: Fränkische Rohrwerke Gebr. Kirchner GmbH + Co KG, 97486 Königsberg/Bayern (DE)
(72) Erfinder:
(74) Vertreter: Schwabe - Sandmair - Marx

(56) Entgegenhaltungen:
- EP-A- 0 024 291
- EP-A- 1 077 341
- DE-C- 19 752 081
- US-A- 3 991 005
- US-A- 4 299 256

## Beschreibung

Die Erfindung betrifft eine Verwendung einer Kunststoffleitung zur Aufnahme von Einzügen gemäß dem Patentanspruchs 1 sowie ein Verfahren zur Herstellung einer solchen Kunststoffleitung gemäß dem Anspruch 8.

Im Stand der Technik sind verschiedene Arten von Kunststoffleitungen mit einem freien Leitungsquerschnitt, etwa Kunststoffrohre mit einem freien Leitungsquerschnitt, bekannt, die dazu eingesetzt werden, elektrische Leitungen, Flüssigkeitsleitungen, und dgl. aufzunehmen, um diese Leitungen zu schützen bzw. im Falle des Austretens von Flüssigkeit aus den aufgenommenen Flüssigkeitsleitungen, die Flüssigkeit zurückzuhalten. Um wirtschaftlich derartige Kunststoffleitungen bzw. Kunststoffrohre herstellen zu können, ist es erforderlich, aus günstigen Rohmaterialien, die die nötige Festigkeit haben, entsprechende Hohlkörper herzustellen, die einen freien Leitungsquerschnitt herstellen. Darüber hinaus ist es nötig, dass in diese freien Leitungsquerschnitte die einzubringenden Einzüge über große Strecken ohne nennenswerten Widerstand eingeführt werden können. Um diese Notwendigkeiten miteinander zu vereinigen, war es bislang nötig, entsprechende Kunststoffleitungen bzw. -rohre aus Polymer herzustellen, was zum Einen relativ kostspielig war und zum Anderen trotzdem Probleme aufwies, weil aufgrund eines nennenswerten Bewegungswiderstandes das Einbringen von Einzügen nur über kurze Strecken möglich war bzw. einen großen Kraftaufwand erforderte, wodurch auch viel Ausschuss entstehen konnte.

Sehr kostengünstige Werkstoffe, wie z.B. Polyvinylchlorid (PVC) konnten nicht eingesetzt werden, da das Polyvinylchlorid einen sehr hohen Bewegungswiderstand hat, der in der Praxis ein wirtschaftliches Einbringen von Einzügen nicht zulässt. Dies ist besonders schade, weil PVC sehr kostengünstig und auch sehr widerstandsfähig gegenüber mechanischen Belastungen ist.

Versuche, eine PVC-Schicht mit einem Kunststoffmaterial zu beschichten, das einen geringen Bewegungswiderstand aufweist, waren bislang sehr unbefriedigend, da sich diese Polymere mit geringem Bewegungswiderstand kaum oder gar nicht mit der Oberfläche des PVC verbinden ließen und sich über kurze Zeit wieder ablösten.

Die EP 1 077 341 A2 betrifft ausschließlich eine Leitung mit einem Schichtsystem, das verhindern soll, dass durch die Leitung Treibstoff diffundieren kann. Dabei werden auch Schichtfolgen mit PVC, einem Haftvermittler und einer zweiten Schicht zur Verhinderung der Diffusion von flüchtigen Treibstoffen offenbart.

Die EP 0 024 291 A2 betrifft ein Verbundmaterial für Körper oder Schichten mit hochverschleißfester Gleit- oder Reiboberfläche. Dieses Verbundmaterial soll auf Untergründen, auf denen es haftet, zum Einsatz gelangen.

Es ist folglich die Aufgabe der vorliegenden Erfindung, eine Kunststoffleitung oder ein Kunststoffrohr mit einem freien Leitungsquerschnitt zur Verwendung zur Aufnahme von Einzügen, mit mehreren Schichten zur Verfügung zu stellen, die bzw. das die oben genannten Nachteile des Standes der Technik kaum noch oder gar nicht aufweist.

Diese Aufgabe wird durch den Gegenstand des Patentanspruchs 1 gelöst. Zweckmäßige Ausführungsformen werden durch die Unteransprüche definiert.

Ferner ist es eine Aufgabe der Erfindung, ein Verfahren zur Herstellung einer zur Aufnahme von Einzügen verwendbaren Kunststoffleitung vorzuschlagen, mit dem eine Kunststoffleitung bzw. ein Kunststoffrohr herstellbar ist, das die oben genannten Nachteile des Standes der Technik wenigstens reduziert, bevorzugt aber kaum oder gar nicht aufweist.

Diese Aufgabe wird durch das Verfahren nach dem Anspruch 8 gelöst.

Gemäß der Erfindung ist dies durch die Verwendung einer Kunststoffleitung mit einer ersten Schicht aus Hart-PVC, einer zweiten Schicht aus einem Polymer und einer Zwischenschicht aus einem Haftvermittler zu erreichen. Es sei bemerkt, dass, falls die erfindungsgemäße Kunststoffleitung bzw. das erfindungsgemäße Kunststoffrohr selbst in ein anderes Rohr eingezogen werden soll, es auch erfindungsgemäß vorgesehen sein kann, dass die Außenschicht bzw. Mantelschicht des erfindungsgemäßen Rohres aus einem Polymer mit geringem Bewegungswiderstand sein kann, während die Innenschicht aus kostengünstigen und mechanisch widerstandsfähigem Hart-PVC (PVC-U) sein kann. Wesentlich ist hierbei, dass die Haftvermittlerschicht zwischen diesen ansonsten nicht aneinander haftenden Schichten vorgesehen ist.

Die Haftvermittlerschicht kann gemäß einer bevorzugten Ausführungsform beispielsweise Ethylen-Vinyl-Acetat (EVA) oder Ethylen-Ethylacrylat (PEA) oder eventuell eine Mischung hiervon aufweisen. Generell kann ausgeführt werden, dass sich für die Haftvermittlerschicht diverse Kunststoffkleber eignen können.

Aufgrund des Einsatzes der Haftvermittlerschicht ist es für eine zur Verwendung mit Einzügen bestimmten Kunststoffleitung überraschenderweise möglich, eine PVC-U-Schicht auf einer Kunststoffschicht eines anderen Polymers zur Haftung zu bringen und umgekehrt.

Damit lassen sich die Vorteile des Kunststoffes Polyvinylchlorid und insbesondere des Hart-Polyvinylchlorids dauerhaft mit anderen Polymeren verbinden, um die mechanischen Eigenschaften von PVC-U und den kostengünstigen Werkstoff PVC-U für Kunststoffleitungen bzw. Kunststoffrohre zur Aufnahme von Einzügen verwenden zu können.

Zusätzliche Vorteile lassen sich dadurch bewerkstelligen, dass der Innenschicht im Falle einer Kunststoffleitung bzw. eines Kunststoffrohres, in das Einzüge aufzunehmen sind, mit den Bewegungswiderstand vermindernden Materialergänzungen angereichert wird. Für den Fall, dass die erfindungsgemäße Kunststoffleitung selbst eingezogen werden soll, d.h., eine glatte Außenschicht bzw. Mantelschicht benötigt, kann dementsprechend, wenn die Innenschicht aus PVC ist, auch die Außenschicht bzw. die Mantelschicht die genannte Materialergänzung zur Minderung des Bewegungswiderstandes beigemengt bekommen.

Die erfindungsgemäße Kunststoffleitung kann erfindungsgemäß sowohl als glattwandige Kunststoffleitung bzw. als glattwandiges Kunststoffrohr ausgebildet werden, wie auch als gewelltes Kunststoffrohr. Die Form der Kunststoffleitung an sich ist dabei frei wählbar und das erfindungsgemäß zu verwendende Rohr kann auch geschlitzt sein, oval ausgebildet sein, oval und geschlitzt ausgebildet sein, angeformte Stutzen haben sowie angeformte Anschlussbereiche beliebiger Art aufweisen.

Die Materialien für die Haftvermittlerschicht sind bevorzugt die, die bereits voranstehend erwähnt worden sind. Als gleitfähiges Polymer wird z.B. Polyethylen eingesetzt, eventuell mit die Gleitfähigkeit fördernden Materialergänzungen, z.B.: Silikon, Graphit, Talkum, Polytetrafluorethylen, Molybdänsulfid.

Das Herstellungsverfahren an sich, bis auf den Einsatz der besonderen Materialien, ist weitgehend ein bewährtes Verfahren. So werden bevorzugt drei Extruder zum plastifizieren der nötigen Kunststoffe für drei Schichten angeordnet. Die verschiedenen Kunststoffmaterialien werden dann einem Spritzkopf zugeleitet, der die drei Schichten in der gewünschten Reihenfolge zueinander anordnet, um einen warmplastisch verformbaren im Wesentlichen zylinderförmigen Körper entstehen zu lassen. Natürlich können auch weitere Schichten gemäß der Erfindung angeordnet werden.

Es sei bemerkt, dass es natürlich auch möglich ist, die betreffenden drei Schichten mit einer PVC-U-Schicht, einer Haftvermittlerschicht und einer Schicht jenseits der Haftvermittlerschicht mit anderen Formen herzustellen. So kann es gemäß dem erfindungsgemäßen Verfahren auch möglich sein, einen Spritzkopf vorzusehen, der keinen Hohlkörper herstellt, sondern mit dem über eine entsprechende Auslassdüse etwa Profile oder dgl. herstellbar sind. So ließen sich etwa auch Kabelschachtprofile oder dgl. herstellen, die unmittelbar nach der Herstellung keinen zylindrischen Hohlkörper bilden, wobei jedoch trotzdem die besonders guten Gleiteigenschaften der Erfindung gepaart mit großer Widerstandsfähigkeit und geringen Kosten zur Verfügung gestellt werden können.

Nachdem die Form, die für den erfindungsgemäßen Gegenstand vorbestimmt ist, entstanden ist, kann die erfindungsgemäß zum Einsatz gelangende Schichtfolge mit PVC, einer Haftvermittlerschicht und einer Schicht aus einem gleitfähigen Polymer durch Abkühlen manifestiert werden. So lassen sich glattwandige Rohre herstellen. Für den Fall, dass Wellrohre oder Rohre mit anderen Profilen herzustellen sind, kann dies mit einem Korrugator geschehen. Korrugatoren sowie Spritzköpfe sind hinreichend bekannt und brauchen hier nicht weiter erörtert zu werden. Lediglich beispielhaft wird auf die DE 101 10 084.1 und die DE 100 62 590.8 verwiesen, die einen Spritzkopf und einen Korrugator beispielhaft zeigen.

Die gemäß der Erfindung zur Anwendung kommende Schichtfolge lässt sich vielfältig einsetzen, beispielsweise auch indem eine sehr widerstandsfähige Schicht aus PVC-U beidseitig mit Haftvermittler und beidseitig mit einer Schicht aus einem gleitfähigen Polymer beschichtet wird, etwa wenn in ein entsprechendes Rohr Einzüge einzubringen sind, wobei das Rohr selbst wiederum einen Einzug in Bezug auf ein Rohr mit größerem Durchmesser bildet.

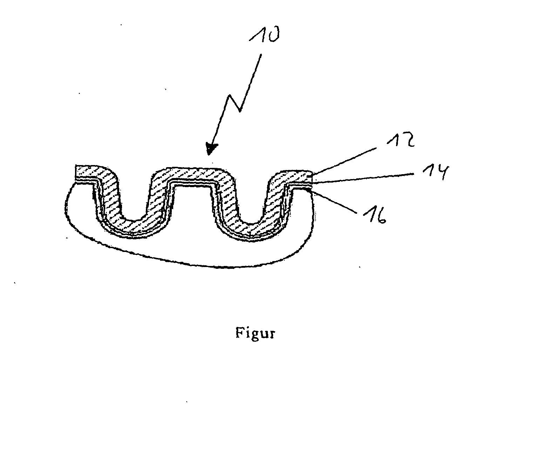

Nachfolgend wird die vorliegende Erfindung unter Bezugnahme auf die beigefügte Figur näher beschrieben, die eine bevorzugte Ausführungsform einer Teilschnittdarstellung einer erfindungsgemäßen Kunststoffleitung in einem teilweisen Längsschnitt darstellt. Die Darstellung und Beschreibung der bevorzugten Ausführungsform lässt weitere Merkmale gemäß der Erfindung, Zielsetzungen gemäß der Erfindung sowie Vorteile gemäß der Erfindung erkennen.

Ein dargestellter Rohrabschnitt 10 weist drei Schichten 12, 14, 16 aus unterschiedlichen Materialien auf.

Eine Schicht 12 ist aus PVC-U ausgebildet. Eine Schicht 14, die unmittelbar auf die Schicht 12 aufgebracht ist, ist aus einem Haftvermittler, insbesondere einem Kunststoffkleber, gebildet. Der Haftvermittler wiederum ist mit einem gleitfähigen Polymer 16 beschichtet.

Während die Schicht 14 beispielsweise aus EVA und/oder EEA bestehen kann, ist die Schicht 16 bevorzugt aus Polyethylen.

Die Schicht aus Polyethylen kann zusätzlich mit einer Materialzugabe angereichert sein, um den Bewegungswiderstand zu mindern, der z.B. gegenüber einem Einzug entstehen könnte. Als Materialzugaben könnten beispielsweise eingesetzt werden: z.B.: Silikon, Graphit, Talkum, Polytetrafluorethylen, Molybdänsulfid.

## Patentansprüche

1. Verwendung einer Kunststoffleitung mit einem freien Leitungsquerschnitt zur Aufnahme von Einzügen, wobei die Kunststoffleitung mehrere Schichten (12, 14, 16) aufweist, mit einer ersten Schicht (12) aus Polyvinylchlorid (PVC) und einer zweite Schicht (16) mit einem Polymer, wobei zwischen der ersten Schicht (12) und der zweiten Schicht (16) eine Haftvermittlerschicht (14) angeordnet ist, und wobei die erste Schicht (12) aus Hart-PVC (PVC-U) ist.

2. Verwendung nach Anspruch 1, wobei die erste Schicht (12) eine Mantelschicht und die zweite Schicht (16) eine Innenschicht ist.

3. Verwendung nach Anspruch 1, wobei die erste Schicht (12) eine Innenschicht und die zweite Schicht (16) eine Mantelschicht ist.

4. Verwendung nach einem der Ansprüche 1 bis 3, wobei die Haftvermittlerschicht wenigstens eines der folgenden Kunststoffmaterialien umfasst: Ethylen-Vinyl-Acetat (EVA), Ethylen-Ethyl-Acrylat (EEA).

5. Verwendung nach einem der Ansprüche 1 bis 4, wobei die Schicht, die kein PVC aufweist, mit einer Materialergänzung angereichert ist, die einen Bewegungswiderstand an der freien Oberfläche dieser Schicht vermindert.

6. Verwendung nach einem der Ansprüche 1 bis 5, wobei die Kunststoffleitung bzw. das Kunststoffrohr als glattwandige Kunststoffleitung- bzw. -Rohr ausgebildet ist.

7. Verwendung nach einem der Ansprüche 1 bis 5, wobei das Kunststoffrohr bzw. die Kunststoffleitung mit einem Profil versehen ist, insbesondere gewellt ist.

8. Verfahren zur Herstellung einer Kunststoffleitung bzw. eines Kunststoffrohres mit verschiedenen Schichten, mit einem freien Leitungsquerschnitt, mit den folgenden Schritten:
- in jeweiligen Extrudern werden jeweilige Kunststoffmaterialien zur Ausbildung jeweiliger Kunststoffschichten (12, 14, 16) plastifiziert;
- die plastifizierten Kunststoffmaterialien werden zu einem Mehrschichtspritzkopf gefördert und in einer vorgegebenen Schichtreihenfolge angeordnet, um die Kunststoffleitung bzw. ein Kunststoffrohr auszubilden,
**dadurch gekennzeichnet,**
- **dass** für eine erste Schicht PVC-U, verwendet wird,
- **dass** für eine zweite Schicht (16) ein gleitfähiges Polymer, insbesondere Polyethylen, verwendet wird, und
- **dass** für eine Zwischenschicht (14) zwischen der ersten und der zweiten Schicht eine Haftvermittlerschicht verwendet wird, wobei
- als Kunststoffmaterial für die Haftvermittlerschicht (14) eines der nachfolgenden Materialien plastifiziert wird: Ethylen-Vinyl-Acetat (EVA), Ethylen-Ethyl-Acrylat (EEA).

## Claims

1. The use of a plastic conduit with a free conduit cross section to accommodate feeds, wherein the plastic conduit has several layers (12, 14, 16), with a first layer (12) of polyvinyl chloride (PVC) and a second layer (16) with a polymer, wherein arranged between the first layer (12) and the second layer (16) is a bonding agent layer (14), and wherein the first layer (12) is of hard PVC (PVC-U).

2. Use according to claim 1, wherein the first layer (12) is a casing layer and the second layer (16) is an inner layer.

3. Use according to claim 1, wherein the first layer (12) is an inner layer and the second layer (16) is a casing layer.

4. Use according to one of the claims 1 to 3, wherein the bonding agent layer includes at least one of the following synthetic materials: ethylene vinyl acetate (EVA), ethylene ethyl acrylate (EEA).

5. Use according to one of the claims 1 to 4, wherein the layer that has no PVC is enriched with a material supplement that reduces a resistance to movement on the free surface of this layer.

6. Use according to one of the claims 1 to 5, wherein the plastic conduit or plastic pipe is designed as a smooth-walled plastic conduit or pipe.

7. Use according to one of the claims 1 to 5, wherein the plastic pipe or plastic conduit is equipped with a profile, in particular is corrugated.

8. Method for producing a plastic conduit or plastic pipe with various layers, with a free conduit cross section, with the following steps:
- in corresponding extruders, respective synthetic materials are plasticised to form the respective synthetic layers (12, 14, 16);
- the plasticised synthetic materials are conveyed to a multi-layer injection head and arranged in a predetermined layer sequence, in order to form the plastic conduit or plastic pipe,
**characterised in that**
- PVC-U is used for a first layer,
- a polymer with sliding properties, in particular polyethylene, is used for a second layer (16), and
- that for an intermediate layer (14) between the first and second layers, a bonding agent layer is used, wherein
- as a synthetic material for the bonding agent layer (14), one of the following materials is plasticised: ethylene vinyl acetate (EVA), ethylene ethyl acrylate (EEA).

## Revendications

1. Utilisation d'une tuyauterie en matière plastique avec une section de tuyauterie libre pour accueillir des éléments à protéger, la tuyauterie en matière plastique présentant plusieurs couches (12, 14, 16), avec une première couche (12) en chlorure de polyvinyle (PVC) et une deuxième couche (16) en polymère, une couche d'agent adhésif (14) étant disposée entre la première couche (12) et la deuxième couche (16) et la première couche (12) étant constituée de PVC rigide (PVC-U).

2. Utilisation suivant la revendication 1, la première couche (12) étant une couche enveloppe et la deuxième couche (16) une couche intérieure.

3. Utilisation suivant la revendication 1, la première couche (12) étant une couche intérieure et la deuxième couche (16) une couche enveloppe.

4. Utilisation suivant l'une des revendications 1 à 3, la couche d'agent adhésif comprenant au moins une des matières plastiques suivantes: éthylène-acétate de vinyle (EVA), éthylène-acrylate d'éthyle (EEA).

5. Utilisation suivant l'une des revendications 1 à 4, la couche qui ne contient pas de PVC étant enrichie d'un complément de matériau diminuant la résistance au mouvement à la surface libre de cette couche.

6. Utilisation suivant l'une des revendications 1 à 5, la tuyauterie en matière plastique ou le tuyau en matière plastique étant formé comme tuyauterie ou tuyau en matière plastique à paroi lisse.

7. Utilisation suivant l'une des revendications 1 à 5, la tuyauterie en matière plastique ou le tuyau en matière plastique étant pourvus d'un profil, en particulier ondulé.

8. Procédé de fabrication d'une tuyauterie en matière plastique ou d'un tuyau en matière plastique avec différentes couches, avec une section de tuyauterie libre, selon les étapes suivantes:
- dans des extrudeuses respectives, des matières plastiques respectives sont plastifiées pour la formation de couches en matière plastique respectives (12, 14, 16);
- les matières plastiques plastifiées sont transportées dans une tête d'injection multicouche et disposées selon une séquence prédéfinie pour former la tuyauterie en matière plastique ou un tuyau en matière plastique,
**caractérisé en ce que**
- on utilise du PVC-U pour une première couche,
- on utilise un polymère apte au glissement, en particulier du polyéthylène, pour une deuxième couche (16), et
- on utilise une couche d'agent adhésif pour une couche intermédiaire (14) entre la première et la deuxième couche,
- un des matériaux suivants étant plastifié comme matière plastique pour la couche d'agent adhésif (14): éthylène-acétate de vinyle (EVA), éthylène-acrylate d'éthyle (EEA).
